# FASCICULE DE BREVET EUROPEEN

(11) **EP 3 891 874 B1**
(45) Date de publication et mention de la délivrance du brevet: **25.01.2023**
(21) Numéro de dépôt: 19842377.4
(22) Date de dépôt: 02.12.2019
(51) Int. Cl.: H02K 11/33

(54) **SYSTEME ELECTRIQUE DE FILTRAGE D'UN MOTEUR ELECTRIQUE INTELLIGENT A MULTI-BOBINAGES DECOUPLES ET MOTEUR ELECTRIQUE INTELLIGENT ASSOCIE**
ELEKTRISCHES FILTRATIONSSYSTEM FÜR EINEN INTELLIGENTEN ELEKTROMOTOR MIT ENTKOPPELTEN MEHRFACHWICKLUNGEN UND ZUGEHÖRIGER INTELLIGENTER ELEKTROMOTOR
ELECTRICAL FILTERING SYSTEM FOR A SMART ELECTRIC MOTOR WITH DECOUPLED MULTIPLE WINDINGS AND ASSOCIATED SMART ELECTRIC MOTOR

(30) Priorité: 05.12.2018 FR 1872385
(43) Date de publication de la demande: 13.10.2021
(73) Titulaire: Safran Electrical & Power, 31702 Blagnac (FR)
(72) Inventeur: PORET, Philippe, 31702 BLAGNAC (FR); CARTAILLER, Laurent, 31702 BLAGNAC (FR); DANCHIN, Julie, 31702 BLAGNAC (FR); CUENOT, Jérémy, 31702 BLAGNAC (FR); BERRY, Olivier, 31702 BLAGNAC (FR)
(74) Mandataire: Cabinet Beau de Loménie
(86) Numéro de dépôt international: PCT/FR2019/052896
(87) Numéro de publication internationale: WO 2020/115418

(56) Documents cités:
- EP-A1- 3 312 983
- FR-A1- 3 044 841
- US-B2- 8 957 557
- US-B2- 9 812 934

## Description

### Arrière-plan de l'invention

L'invention se rapporte à un moteur électrique intelligent, notamment pour un aéronef, et plus particulièrement à l'architecture d'un moteur électrique intelligent à multi-bobinages découplés à forte intégration mécanique.

Les aéronefs à décollage et atterrissage verticaux sont de plus en plus utilisés notamment dans le transport intra-urbain et interurbain des marchandises ou des personnes.

La révolution dans le transport aérien fait naître un besoin croissant pour la propulsion des nouveaux aéronefs, par exemple les VTOL (« Vertical Take-Off and Landing » ou aéronefs à décollage et atterrissage vertical en français). L'énergie électrique est le principal vecteur de cette révolution, de par sa souplesse de mise en oeuvre, son efficience (seule l'énergie nécessaire est produite), sa fiabilité (maintenance limités) et principalement par la réduction potentielle de masse et volume qu'il engendre par rapport à un système de propulsion classique (thermique avec distribution d'énergie hydraulique ou pneumatique). En revanche, la puissance actuelle des moteurs électriques embarqués ne permet pas de rivaliser avec la puissance développé par un seul moteur thermique, il est donc nécessaire de multiplier le nombre de moteurs électriques.

Il est alors aisé de comprendre que les contraintes d'intégration mécatronique (masse et le volume) de l'ensemble moteur électrique, contrôleur (électronique de puissance et électronique de commande), filtrage et système de refroidissement est une problématique clef de ce changement, notamment pour maintenir un ensemble de propulsion dont la masse et l'encombrement restent faibles.

La machine électrique d'un moteur intelligent est commandée par une unité électronique de commande comportant notamment un convertisseur électrique de puissance tel qu'un onduleur. Lors de la conception d'un onduleur de commande d'une machine électrique d'un moteur intelligent, les points suivants doivent être pris en compte :
- les transistors de puissance, de type MOS ou IGBT par exemple, des bras de l'onduleur doivent être implantés de façon à dissiper les pertes en commutation et en conduction sur un radiateur afin d'assurer leur pérennité d'un point de vue thermique ;
- les inductances parasites entres les bras de l'onduleur et les condensateurs de découplage prévus pour le filtrage doivent être minimisées afin de limiter les surtensions lors du blocage des transistors de puissance afin d'assurer la pérennité des transistors de puissance d'un point de vue électrique.
- Les condensateurs de découplage des moyens de filtrage doivent avoir une valeur minimale afin d'assurer la stabilité du bus de tension continue. De plus, ils doivent être configurés pour fournir le courant efficace à l'onduleur. Ces deux contraintes impliquent un volume important pour les condensateurs de découplage.

En général, les niveaux de courant élevés utilisés pour ce type d'application impliquent l'utilisation d'un bus-bar ou d'un circuit imprimé, ou PCB, de puissance pour électriquement raccorder les transistors de puissance des bras d'onduleur et les condensateurs des moyens de filtrage. De ce fait, tous les transistors de puissance sont implantés sur la même surface du radiateur afin de limiter les problèmes de montage et d'assurer une tenue vis-à-vis des contraintes mécaniques liées aux vibrations et/ou aux chocs.

Il est notamment connu du document FR 3 044 841 un dispositif selon le préambule de la revendication 1.

### Objet et résumé de l'invention

L'invention vise à fournir une solution architecturelle de système de filtrage permettant de minimiser le volume occupé par le système de filtrage et d'optimiser son implantation dans le boîtier d'un moteur intelligent tout en limitant les inductances parasites entre les transistors de puissance et les condensateurs de découplage pour le filtrage et en offrant une robustesse mécanique d'assemblage vis-à-vis des chocs et des vibrations et une simplification de l'intégration mécanique au montage en évitant l'iso-statisme.

Dans un premier objet de l'invention, il est proposé un système de filtrage électrique comprenant des condensateurs et un dispositif de distribution électrique comprenant un empilement de deux couches électriquement conductrices en regard l'une de l'autre et séparées par une couche électriquement isolante, l'empilement étant monté sur une plaque rigide électriquement isolante, et lesdits condensateurs étant montés sur ledit dispositif de distribution électrique, la plaque rigide s'étendant dans un plan orthogonal à la direction dans laquelle sont empilées les couches conductrices et isolantes, le dispositif de distribution électrique comprenant une pluralité de connexions électriques réparties angulairement sur le périmètre extérieure du dispositif de distribution électrique. Selon une caractéristique générale du premier objet de l'invention, les connexions électriques s'étendent en saillie dans un plan parallèle au plan dans lequel s'étend la plaque rigide, et depuis le périmètre extérieur du dispositif de distribution électrique, les connexions étant, d'une part, raccordées chacune à au moins un condensateur du système de filtrage et, d'autre part, destinées à être raccordées à un bras d'un onduleur électrique monté sur un convertisseur électrique tubulaire d'une unité électronique de commande.

La forme du dispositif de distribution électrique permet de limiter les inductances de fuite entre les différents bras de l'onduleur et les condensateurs de découplage du système de filtrage.

Le système de filtrage selon l'invention permet en outre de communaliser les condensateurs de découplage vis-à-vis des différents bras de l'onduleur du convertisseur électrique de l'unité électronique de commande.

Selon l'invention, les connexions électriques comprennent chacune une extrémité solidaire de l'empilement, une extrémité libre opposée à l'extrémité solidaire, et une portion flexible entre les deux extrémités.

La portion flexible prévue entre les deux extrémités de chacune des connexions électriques permet d'offrir un degré de liberté mécanique vis-à-vis du montage et des contraintes mécaniques telles que les chocs et les vibrations.

La portion flexible peut présenter une forme de vague dans un plan orthogonal au plan dans lequel s'étend le support rigide. Cette forme de vague, ou forme non linéaire, dans ledit plan orthogonal, permet d'autoriser un déplacement de la plaque formée par l'empilement et le support rigide dans une direction parallèle au plan dans lequel s'étend le support rigide. Cette forme de vague dans ledit plan orthogonal permet également d'autoriser un déplacement de la plaque formée par l'empilement et le support rigide dans une direction orthogonale au plan dans lequel s'étend le support rigide.

Le système de filtrage comprend préférentiellement un nombre de connexions qui soit un multiple de trois afin d'avoir une connexion pour chaque phase.

Selon un autre aspect de l'invention, il est proposé un moteur intelligent comprenant une unité électronique de commande comprenant un convertisseur électrique en forme de cylindre creux et un système de filtrage électrique tel que défini ci-dessus et électriquement raccordé au convertisseur électrique de l'unité électronique de commande.

Selon un autre aspect de l'invention, il est proposé un système de propulsion d'un aéronef comprenant au moins un rotor et, pour chaque rotor au moins un moteur intelligent tel que défini ci-dessus et mécaniquement raccordé au rotor.

Selon encore un autre aspect de l'invention, il est proposé un aéronef doté d'un système de propulsion d'aéronef tel que défini ci-dessus.

### Brève description des dessins.

L'invention sera mieux comprise à la lecture faite ci-après, à titre indicatif mais non limitatif, en référence aux dessins annexés sur lesquels :
- la figure 1 présente schématiquement un aéronef multi-rotors muni d'un système de propulsion selon un mode réalisation de l'invention ;
- la figure 2 représente schématiquement une vue en coupe d'un moteur intelligent du système de propulsion de la figure 1 selon un premier mode de réalisation de l'invention ;
- la figure 3 est une représentation schématique de l'architecture électrique selon un premier mode de réalisation de la machine électrique du moteur intelligent de la figure 2 ;
- la figure 4 présente schématiquement une vue en coupe d'un dispositif de distribution électrique d'un système de filtrage selon un mode de réalisation de l'invention ;
- la figure 5 présente schématiquement une vue en perspective du dispositif de distribution électrique de la figure 4 ;
- la figure 6 présente une vue en perspective d'un dispositif de distribution électrique d'un système de filtrage selon un second mode de réalisation de l'invention.

### Description détaillée de modes de réalisation

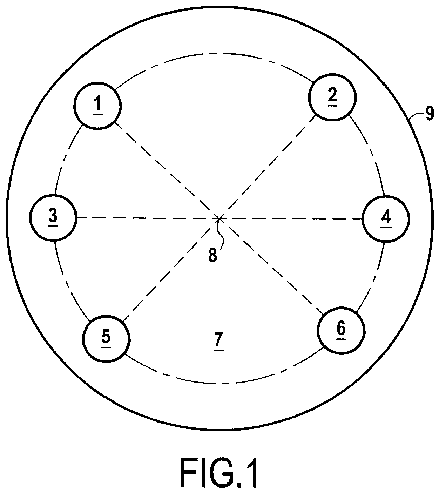

Sur la figure 1 est présenté de manière schématique un aéronef multi-rotors 7 muni d'un système de propulsion 9 selon un mode de réalisation de l'invention. Dans l'exemple illustré sur la figure 1, le système de propulsion 9 comprend six rotors 1 à 6 répartis sur un cercle en trait mixte multi-rotors. Les rotors 1 à 6 formant trois couples de rotors, les rotors d'un même couple étant symétriquement opposés par rapport à un centre de symétrie 8. Le premier couple de rotors comprend les rotors 1 et 6, le deuxième couple de rotors comprend les rotors 2 et 5, le troisième couple de rotors comprend les rotors 3 et 4. En outre, le système de propulsion 9 comprend un moteur intelligent 10 pour chaque rotor 1 à 6.

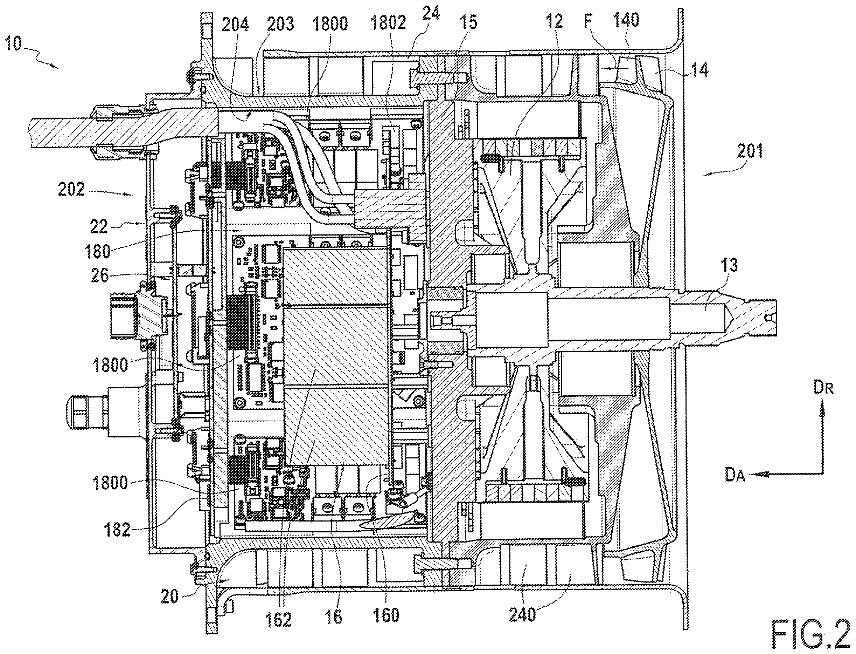

Sur la figure 2 est représenté schématiquement une vue en coupe d'un moteur intelligent 10 selon un premier mode de réalisation de l'invention.

Le moteur intelligent 10 illustré sur la figure 2 comprend une machine électrique 12 agissant comme convertisseur électromécanique et doté d'une partie tournante définissant une direction axiale D_{A} et une direction radiale D_{R}. La figure 2 est une vue en coupe selon un plan comprenant la direction axiale D_{A} et la direction radiale D_{R}.

Le moteur intelligent 10 comprend en outre une roue à aubes 14, des moyens de filtrage électrique 16, une unité électronique de commande 18, et un boîtier 20, ou carter à l'intérieur duquel sont logés la machine électrique 12, l'unité électronique de commande 18 et les moyens de filtrage 16.

La roue à aubes 14 est mécaniquement couplée à la machine électrique 12 par un arbre de transmission 13 qui permet à la machine électrique 12 d'entraîner la roue à aubes 14.

Le boîtier 20 présente une forme cylindrique creuse, avec, dans le mode de réalisation illustré sur la figure 2, une section circulaire. L'axe de révolution du boîtier 20 est confondu avec l'axe de rotation D_{A} de la machine électrique 12 qui est confondu avec l'axe de rotation de l'arbre de transmission 13 et de la roue à aubes 14.

Le boîtier 20 comprend dans la direction axiale D_{A} une première extrémité 201 et une seconde extrémité 202 opposée à la première extrémité 201. Dans la direction axiale D_{A}, le boîtier 20 est fermé à sa première extrémité 201 par la roue à aubes 14, et à sa seconde extrémité 202 par un couvercle 22.

Le boîtier 20 comprend un dispositif de refroidissement 24 monté une surface radiale externe 203 du boîtier 20. Les termes "interne" et "externe", et « intérieur » et « extérieur » sont utilisés ici en référence à la direction radiale D_{R} dans le moteur intelligent 10.

Le dispositif de refroidissement 24 comprend un ensemble d'ailettes 240 s'étendant radialement vers l'extérieur depuis la surface radiale externe 203 du boîtier 20 et forme ainsi un radiateur permettant un échange calorifique entre les ailettes 240 et un flux d'air F traversant les ailettes 240 du dispositif de refroidissement 24. Le flux d'air de refroidissement F est généré et alimenté par des aubes 140 de la roue à aubes 14 entraînée par la machine électrique 12 et est ainsi auto entretenu.

Dans le mode de réalisation illustré sur la figure 2, le dispositif de refroidissement 24 comprend en outre un carter de refroidissement 245 cylindrique disposé autour des ailettes de refroidissement 240. Le carter de refroidissement 245 défini ainsi avec la surface radiale externe 203 du boîtier 20, une veine de refroidissement 248 dans laquelle le flux d'air de refroidissement F est canalisé.

Dans une variante, le moteur intelligent pourrait ne pas comprendre de roues à aubes et de carter de refroidissement afin de réduire la masse du moteur intelligent. Le moteur intelligent serait alors refroidi par le flux d'air générée par le rotor de l'aéronef, le rotor étant constitué classiquement d'une hélice liée mécaniquement directement à l'arbre de rotation mécanique du moteur intelligent.

Dans le mode de réalisation illustré sur la figure 2 qui représente une configuration dite « axiale » du moteur intelligent 10 selon l'invention, le moteur intelligent 10 comprend un boîtier 20 comportant un dispositif de refroidissement, une partie motrice comportant la machine électrique 12, la roue à aubes 14 et l'arbre de transmission 13, et une partie électronique séparée dans la direction axiale de la partie motrice, la partie électronique comprenant notamment les moyens de filtrage électrique 16 et l'unité de commande 18.

Pour séparer physiquement la partie motrice de la partie électronique, le moteur intelligent 10 comprend une paroi interne 15 s'étendant dans un plan radial comprenant la direction radiale D_{R} et orthogonal à la direction axiale D_{A} et fixée à une surface radiale interne 204 du boîtier 20. La machine électrique 12 est disposée à l'intérieur du boîtier 20 en amont de la paroi interne 15 tandis que les moyens de filtrage électrique 16 et l'unité électronique de commande 18 de la partie électronique sont disposés en aval de la paroi interne 15.

Les termes "amont" et "aval" sont utilisés ici en référence au sens d'écoulement du flux d'air de refroidissement délivré représenté par la flèche F sur la figure 2.

L'unité électronique de commande 18 comprend un convertisseur électrique statique 180 configuré pour alimenter machine électrique 10.

Le convertisseur électrique 180 est placé directement à la suite de la machine électrique 12 dans le boîtier 20 du moteur intelligent 10 ce qui permet de réduire la longueur des connexions électriques entre le convertisseur électrique 180 et la machine électrique 12 passant au travers de la paroi interne 15 et ainsi de se passer d'inductances interphases.

Le convertisseur électrique 180 comprend, dans le mode de réalisation illustré sur la figure 2, six cartes électroniques de puissance 1800 arrangées ensemble pour former cylindre creux à base hexagonale coaxiale avec la machine électrique 12.

Dans une variante où le convertisseur électrique comprendrait huit cartes électroniques, il formerait un cylindre à base octogonale. S'il comprenait cinq cartes électroniques, il formerait un cylindre à base pentagonale. Dans une variante où le convertisseur électrique comprendrait une unique carte électronique, il pourrait former un cylindre creux à base circulaire avec une carte électronique de puissance présentant une forme annulaire, éventuellement avec une première extrémité et une seconde extrémité en regard l'une de l'autre dans une direction orthogonale à la direction radiale D_{R} et à la direction axiale D_{A}.

Les cartes électroniques 1800 sont disposées en regard de la surface interne 204 du boîtier 20 pour maximiser le refroidissement des composants électroniques de puissance.

Les moyens de filtrage 16 comprennent une carte électronique de filtrage 160 sur laquelle sont montés des condensateurs 162.

Dans le mode de réalisation illustré sur la figure 2, la carte électronique de filtrage 160 des moyens de filtrage 16 possède une forme hexagonale permettant son insertion dans le cylindre creux formé par les cartes électroniques 1800 du convertisseur électronique 180. La forme hexagonale de la carte électronique de filtrage 160 coopère avec la section hexagonale du cylindre creux formé par les cartes électroniques de puissance 1800 du convertisseur électrique 180, ce qui permet d'ajuster la carte électronique de filtrage 160 au plus près des cartes électroniques de puissance 1800. Les condensateurs 162 et la carte électronique de filtrage 160 sont logés dans le cylindre creux du convertisseur électrique 180.

Chaque carte électronique 1800 du convertisseur électrique 180 comprend au moins une borne de connexion 1802 s'étendant dans un plan radial comprenant la direction radiale D_{R} et orthogonal à ladite direction axiale D_{A} permettant de raccorder électriquement la carte électronique de filtrage 160 aux cartes électroniques de puissance 1800 du convertisseur électrique 180. Chaque borne de connexion 1802 comporte une partie ondulée lui fournissant une élasticité qui permet d'offrir une certaine liberté de mouvement à la carte électronique de filtrage 160 par rapport au convertisseur électrique 180. L'intégration du filtrage électrique dans le boîtier au plus près des éléments perturbateurs, tels que les interrupteurs de puissance des cartes électroniques de puissance 1800, permet de réduire les inductances de câblage et ainsi de réduire la masse et le volume du filtrage.

En outre, l'unité électronique de commande 18 comprend une carte électronique de commande 182 configurée pour commander le fonctionnement de la machine électrique 12. Dans le mode de réalisation illustré sur la figure 2, la carte électronique de commande 182 comprend une forme hexagonale s'étendant dans un plan radial comprenant la direction radiale D_{R} et orthogonal à la direction axiale D_{A} et parallèle à la carte de filtrage 160.

Le moteur intelligent 10 comprend en outre une carte électronique de supervision 26 logée à l'intérieur du boîtier 20 et en communication avec la carte électronique de commande 182. La carte électronique de supervision s'étend dans un plan radial comprenant la direction radiale D_{R} et orthogonal à la direction axiale D_{A} et parallèle à la carte de filtrage 160. La carte électronique de supervision 26 est disposée en regard du couvercle 22, entre le couvercle 22 et la carte électronique de commande 182.

Dans cette configuration axiale, le dispositif de refroidissement 24 est communalisé entre la machine électrique 12 et la partie électronique du moteur intelligent 10 comprenant les moyens de filtrage 16 et l'unité électronique de commande 18. Le flux d'air de refroidissement F délivré par les aubes 140 de la roue à aubes 14 circule le long de la surface radiale externe 203 du boîtier 20 et communique de manière fluidique avec les ailettes 240 du dispositif de refroidissement 24. La surface radiale externe 203 du boîtier 20 récupère à la fois la chaleur générée par la machine électrique 12 et la chaleur générée par la partie électronique, notamment par le convertisseur de puissance 180 et transfère les calories au flux d'air de refroidissement F notamment via les ailettes 240, le flux d'air F évacuant ensuite les calories hors du moteur intelligent 10.

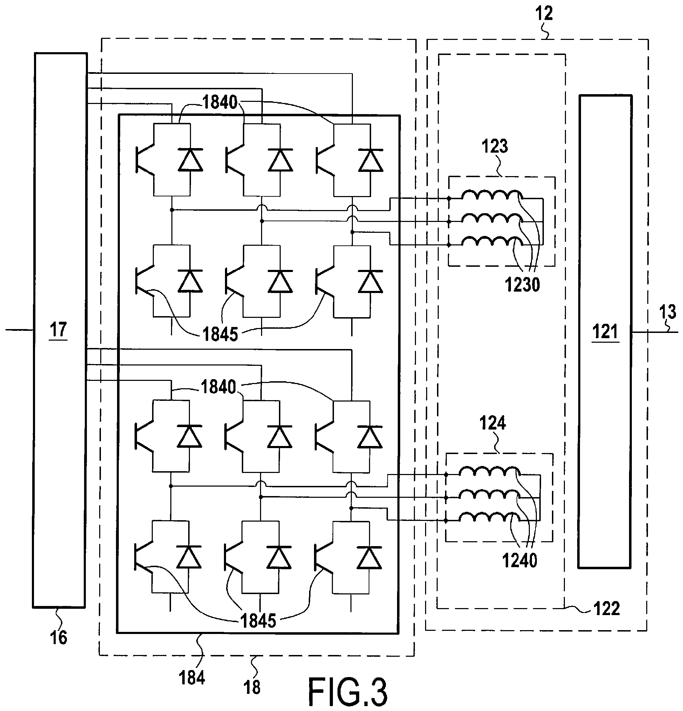

Comme cela est illustré sur la figure 3, la machine électrique 12 du moteur intelligent 10 est une machine synchrone comportant un rotor 121 à aimants permanents et un stator hexaphasé 122 doté d'un premier ensemble triphasé 123 de trois premières bobines 1230 électriquement couplées en étoile et d'un second ensemble triphasé 124 de trois secondes bobines 1240 électriquement couplées en étoile.

L'unité électronique de commande 18 de la machine électrique 12 synchrone comporte un onduleur de commande 184 muni de six bras indépendants 1840 configurés chacun pour piloter une phase du stator hexaphasé de la machine électrique 12. Les deux ensembles triphasés 123 et 124 de bobines en étoile sont découplées magnétiquement et électriquement l'un de l'autre.

Pour avoir un premier et un second ensembles triphasés 123 et 124 de bobines électriquement et magnétiquement indépendants l'un de l'autre, les bobines 1230 du premier ensemble triphasé 123 en étoile sont bobinées puis les bobines 1240 du second ensemble triphasé 124 en étoile sont bobinées à l'issu du bobinage des bobines 1230 du premier ensemble triphasé 123.

Le stator 122 comprend une couronne dentée. Chacune des premières bobines 1230 et des secondes bobines 1240 est bobinée autour d'une seule dent de la couronne dentée ce qui permet de minimiser la taille du stator 122, notamment la taille de la tête de chacune des bobines 1230 et 1240.

Le rotor 121 comporte des aimants disposés selon une configuration HalBach pour augmenter le couple massique du moteur intelligent 10.

Les premières bobines 1230 du premier ensemble triphasé 123 sont disposées sur une première plage angulaire du stator s'étendant sur 180° mécaniques et les secondes bobines 1240 du second ensemble 124 sont disposées sur une seconde plage angulaire du stator s'étendant sur 180° mécaniques. La première plage angulaire est distincte de la seconde plage, chaque plage angulaire couvrant donc un demi-cercle ce qui permet de maximiser le découplage magnétique et de faciliter l'isolement électrique entre les deux ensembles triphasés 123 et 124.

L'unité électronique de commande 18 comporte en outre un module de régulation du courant dans chaque ensemble triphasé 123 et 124 indépendamment de l'autre triphasé 124 et 123, et un module de régulation de la vitesse du rotor 121.

Le moteur intelligent 10 comprend également une interface de connexion 17 raccordant un bus d'alimentation haute tension continue à chacun des six bras 1840 de l'onduleur 184 de l'unité électronique de commande 18. L'interface de connexion 17 comporte les moyens de filtrage 16 réalisés sous la forme d'un étage de découplage capacitif muni de condensateurs de mode différentiel. Dans le mode de réalisation illustré sur la figure 2, l'interface de connexion 17 est confondue avec la carte électronique de filtrage 160.

Dans le mode de réalisation illustré sur la figure 3, chaque carte électronique de puissance 1800 comprend des transistors de puissance 1845, des éléments de protection électronique de l'onduleur 184, un capteur de courant de phase et un capteur de tension du bus haute tension continu.

Le système de filtrage selon l'invention correspond aux moyens de filtrage 16 et comprend un dispositif de distribution électrique confondu avec la carte électronique de filtrage 160 décrite ci-dessus et les condensateurs 162 montés sur la carte électronique de filtrage 160.

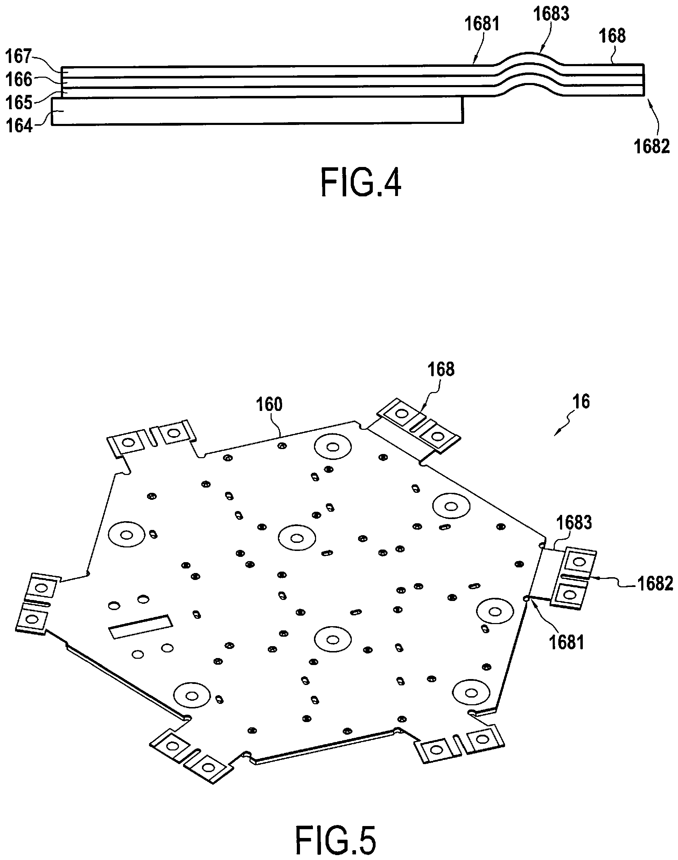

Sur les figures 4 et 5 sont illustrées respectivement une vue en coupe et une vue en perspective d'une carte électronique de filtrage 160 hexagonale des moyens de filtrage 16. Pour plus de lisibilité, les condensateurs 162 n'ont pas été représentés sur les figures 4 et 5.

Comme cela est illustré, la carte électronique de filtrage 160 comprend un support rigide 164 électriquement isolant s'étendant dans un plan et présentant une épaisseur dans une direction orthogonale au plan du support 164. La carte électronique de filtrage 160 comprend en outre, empilées successivement sur le support 164, une première couche électriquement conductrice 165, une couche électriquement isolante 166, et une seconde couche électriquement conductrice 167.

La carte électronique de filtrage 160 comprend des bornes de connexions 168 s'étendant au-delà du périmètre externe du support rigide 164 dans une direction comprise dans le plan du support 164. Chaque borne de connexion 168 comprend une première extrémité 1681 solidaire du reste de la carte électronique de filtrage 160 qui forme un dispositif de distribution électrique et une seconde extrémité 1682 libre et opposée à la première extrémité 1681. Entre les deux extrémités 1681 et 1682 d'une borne de connexion 168, chaque borne de connexion 168 comprend une portion flexible 1683.

La portion flexible 1683 forme une vague, ou ondelette, dans un plan orthogonal au plan dans lequel s'étend le support rigide 164, c'est-à-dire dans le plan de coupe de la figure 4.

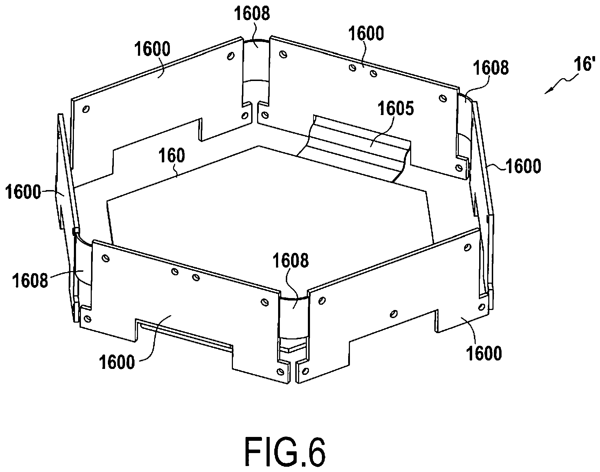

Sur la figure 6 est présentée une vue en perspective d'un dispositif de distribution électrique d'un système de filtrage selon un second mode de réalisation de l'invention. Pour plus de lisibilité, les condensateurs 162 n'ont pas été représentés sur la figure 6.

Dans ce second mode de réalisation le système de filtrage 16' comprend non seulement une carte électronique de filtrage 160 hexagonale mais également six cartes électroniques de filtrage supplémentaires 1600 disposées orthogonalement au plan dans lequel s'étend la carte électronique hexagonale 160. L'ensemble des cartes électroniques supplémentaires 1600 forme un cylindre creux à base hexagonal à l'intérieur duquel est disposé la carte électronique de filtrage 160.

Dans le mode de réalisation illustré sur la figure 6, dans un premier groupe de trois cartes électroniques supplémentaires 1600 successives, une première carte électronique supplémentaire 1600 est couplée à la carte électronique de filtrage 160 via une première connexion souple 1605, réalisées comme les bornes de connexion 168, possédant une partie flexible en forme de vague, et les deux cartes électroniques supplémentaires 1600 adjacentes à la première carte électronique sont raccordées à la première carte électronique supplémentaire via des connexions souples 1608 ce qui permet de les coupler à la carte électronique de filtrage 160.

Le groupe des trois autres cartes électroniques supplémentaires 1600 comprennent également une connexion souple 1605 entre la carte électronique de filtrage 160 et une première carte électronique supplémentaire 1600 du groupe et deux connexions souples 1608 entre la première carte électronique supplémentaire du groupe et les deux cartes électroniques supplémentaires qui lui sont adjacentes.

Dans ce mode de réalisation illustré sur la figure 6, le système de filtrage 16' est logé à l'intérieur du cylindre creux formé par les cartes électroniques 1800 du convertisseur électrique 180 de l'unité électronique de commande 18 du moteur intelligent 10. Le système de filtrage 16' comprend des bornes de connexion souples raccordées entre la carte électronique de filtrage 160 et les cartes électroniques 1800 du convertisseur électrique 180 et/ou entre les cartes électroniques supplémentaires 1600 et les cartes électroniques 1800 du convertisseur électrique 180.

L'invention fournit un système de filtrage permettant de minimiser le volume occupé par le système de filtrage et d'optimiser son implantation dans le boîtier d'un moteur intelligent tout en limitant les inductances parasites entre les transistors de puissance et les condensateurs de découplage pour le filtrage et en offrant une résistance mécanique aux vibrations en évitant l'iso-statisme.

## Revendications

1. Système de filtrage électrique (16) comprenant des condensateurs (162) et un dispositif de distribution électrique (160) comprenant un empilement de deux couches électriquement conductrices (165, 167) en regard l'une de l'autre et séparées par une couche électriquement isolante (166), l'empilement étant monté sur une plaque rigide (164) électriquement isolante, et lesdits condensateurs (162) étant montés sur ledit dispositif de distribution électrique (160), la plaque rigide (164) s'étendant dans un plan orthogonal à la direction dans laquelle sont empilées les couches conductrices (165, 167) et isolante (166), le dispositif de distribution électrique (160) comprenant une pluralité de connexions électriques (168) réparties angulairement sur le périmètre extérieure du dispositif de distribution électrique (160)
**caractérisé en ce que** les connexions électriques (168) s'étendent en saillie dans un plan parallèle au plan dans lequel s'étend la plaque rigide (164), et depuis le périmètre extérieur du dispositif de distribution électrique (160), les connexions (168) étant, d'une part, raccordées chacune à au moins un condensateur (162) du système de filtrage (16) et, d'autre part, destinées à être raccordées à un bras (1840) d'un onduleur électrique (184) monté sur un convertisseur électrique tubulaire (180) d'une unité électronique de commande (18), les connexions électriques (168) comprenant chacune une première extrémité (1681) solidaire de l'empilement, une seconde extrémité (1682) libre opposée à la première extrémité (1681), et une portion flexible (1683) entre les deux extrémités (1681, 1682).

2. Système de filtrage électrique (16) selon la revendication 1, comprenant un nombre de connexions (168) qui soit un multiple de trois.

3. Moteur intelligent (10) comprenant une unité électronique de commande (18) comprenant un convertisseur électrique (180) en forme de cylindre creux et un système de filtrage électrique (16) selon l'une des revendications 1 ou 2 électriquement raccordé au convertisseur électrique (180) de l'unité électronique de commande (18).

4. Système de propulsion (9) d'un aéronef (7) comprenant au moins un rotor (1 à 6) et, pour chaque rotor (1 à 6) au moins un moteur intelligent (10) selon la revendication 3 mécaniquement raccordé au rotor (1 à 6).

5. Aéronef (7) comprenant un système de propulsion (9) selon la revendication 4.

## Patentansprüche

1. Elektrisches Filtrationssystem (16), das Kondensatoren (162) und eine elektrische Verteilungsvorrichtung (160) umfasst, die eine Stapelung von zwei elektrisch leitfähigen Schichten (165, 167) einander gegenüberliegend und durch eine elektrisch isolierende Schicht (166) getrennt umfasst, wobei die Stapelung auf einer elektrisch isolierenden starren Platte (164) montiert ist und die Kondensatoren (162) auf der elektrischen Verteilungsvorrichtung (160) montiert sind, wobei die starre Platte (164) sich in einer Ebene orthogonal zu der Richtung erstreckt, in der die leitfähigen (165, 167) und die isolierende Schicht (166) gestapelt sind, wobei die elektrische Verteilungsvorrichtung (160) eine Vielzahl von elektrischen Verbindungen (168) umfasst, die winklig auf dem äußeren Umfang der elektrischen Verteilungsvorrichtung (160) verteilt sind,
**dadurch gekennzeichnet, dass** die elektrischen Verbindungen (168) sich in einer Ebene parallel zu der Ebene, in der sich die starre Platte (164) erstreckt, hervorstehend und von dem äußeren Umfang der elektrischen Verteilungsvorrichtung (160) erstrecken, wobei die Verbindungen (168) einerseits jeweils an mindestens einen Kondensator (162) des Fitrationssystems (16) angeschlossen sind und andererseits dazu bestimmt sind, an einen Arm (1840) eines elektrischen Wechselrichters (184) angeschlossen zu sein, der an einem rohrförmigen elektrischen Wandler (180) einer elektronischen Steuereinheit (18) montiert ist, wobei die elektrischen Verbindungen (168) jeweils ein erstes Ende (1681), das fest mit der Stapelung verbunden ist, ein zweites, freies Ende (1682), das dem ersten Ende (1681) entgegengesetzt ist, und einen flexiblen Abschnitt (1683) zwischen den zwei Enden (1681, 1682) umfasst.

2. Elektrisches Filtrationssystem (16) nach Anspruch 1, das eine Anzahl von Verbindungen (168) umfasst, die ein Vielfaches von drei ist.

3. Intelligenter Motor (10), der eine elektronische Steuereinheit (18) umfasst, die einen elektrischen Wandler (180) in der Form eines hohlen Zylinders und ein elektrisches Fitrationssystem (16) nach einem der Ansprüche 1 oder 2 umfasst, das elektrisch an den elektrischen Wandler (180) der elektronischen Steuereinheit (18) angeschlossen ist.

4. Antriebssystem (9) eines Luftfahrzeugs (7), das mindestens einen Rotor (1 bis 6) und für jeden Rotor (1 bis 6) mindestens einen intelligenten Motor (10) nach Anspruch 3 umfasst, der mechanisch an den Rotor (1 bis 6) angeschlossen ist.

5. Luftfahrzeug (7), das ein Antriebssystem (9) nach Anspruch 4 umfasst.

## Claims

1. An electrical filtering system (16) comprising capacitors (162) and an electrical distribution device (160) comprising a stack of two electrically conducting layers (165, 167) facing one another and separated by an electrically insulating layer (166), the stack being mounted on a rigid electrically insulating plate (164), and said capacitors (162) being mounted on said electrical distribution device (160), the rigid plate (164) extending in a plane orthogonal to the direction in which the conducting (165, 167) and insulating (166) layers are stacked,
**characterized in that** the electrical distribution device (160) comprises a plurality of electrical connections (168) distributed angularly over the outer perimeter of the electrical distribution device (160) and protruding in a plane parallel to the plane in which the rigid plate (164) extends, and extending from the outer perimeter of the electrical distribution device (160), each of the connections (168) being, on the one hand, connected to at least one capacitor (162) of the filtering system (16) and, on the other hand, intended to be connected to an arm (1840) of an electrical inverter (184) mounted on a tubular electrical converter (180) of an electronic control unit (18), each of the electrical connections (168) comprising a first end (1681) integral with the stack, a second free end (1682) opposite to the first end (1681), and a flexible portion (1683) between the two ends (1681, 1682).

2. The electrical filtering system (16) according to claim 1, comprising a number of connections (168) which is a multiple of three.

3. A smart motor (10) comprising an electronic control unit (18) comprising an electrical converter (180) in the form of a hollow cylinder and an electrical filtering system (16) according to one of claims 1 or 2 electrically connected to the electrical converter (180) of the electronic control unit (18).

4. A propulsion system (9) for an aircraft (7) comprising at least one rotor (1 to 6) and, for each rotor (1 à 6), at least one smart motor (10) according to claim 3 mechanically connected to the rotor (1 to 6).

5. An aircraft (7) comprising a propulsion system (9) according to claim 4.
